# EUROPEAN PATENT APPLICATION

(11) **EP 1 405 830 A1**
(43) Date of publication of application: **07.04.2004**
(21) Application number: 02722704.0
(22) Date of filing: 18.04.2002
(51) Int. Cl.: C03B 8/04, C03B 37/14

(54) **GLASS BASE MATERIAL AND METHOD OF MANUFACTURING GLASS BASE MATERIAL**

(30) Priority: 13.06.2001 JP 2001178240; 22.11.2001 JP 2001357965
(71) Applicant: Sumitomo Electric Industries, Ltd., Osaka-shi, Osaka 541-0041 (JP)
(72) Inventor: ISHIHARA, Tomohiro c/o Yokohama Works of, Yokohama-shi, Kanagawa 244-0844 (JP)
(74) Representative: HOFFMANN - EITLE
(86) International application number: PCT/JP2002/003863
(87) International publication number: WO 2002/102725

(57) **Abstract**

In a method for manufacturing a glass preform through a heating process of heating a glass particles deposit including a clad partially while moving it successively in a longitudinal direction to form the glass particles deposit, and vitrifying the glass particles deposit to form the glass preform, wherein a chlorine based gas is preferably included at least in the atmosphere of a furnace tube 2 to vitrify the glass preform 9 in the process of heating the glass particles deposit while moving at least the glass particles deposit upward or downward, using a lift 7 for traversing the glass particles deposit (glass preform 9) upward or downward throughout the process.

## Description

### Field of the Invention

The present invention relates to a glass preform and a method for manufacturing the glass preform, and more particularly to a method for manufacturing an optical fiber preform through the synthesis of glass particles deposit by an OVD method, and a glass preform for optical fiber with reduced amount of metallic impurities.

### Background Art

As the conventional methods for manufacturing the glass particles deposit, a VADmethod and an OVDmethod are well-known. These synthesizing methods fundamentally involve producing glass particles by supplying a glass source gas and a combustion gas to a glass particle synthesizing burner and hydrolyzing or oxidizing a glass raw material in the oxyhydrogen flame.

In the above methods, a dehydration process and a vitrification process for the glass particles deposit was disclosed in JP-A-61-270232. Herein, the glass particles deposit is dehydrated employing a dehydrating agent in the first heat treatment process, and the vitrification process is performed in an inert gas (including O₂) atmosphere in the second heat treatment process. However, there is less effect of removing the metallic impurities in the glass particles deposit. Also, in JP-A-61-97141, the glass particles deposit is heated at temperatures of 1100 to 1300°C, before being vitrified, to make uniform a distribution of bulk density in a radial direction, and then vitrified.

In this case, there is some effect of reducing voids of He species, but low effect of removing the metallic impurities mixed into the glass particles deposit, inevitably leading to disconnection of the fiber.

Also, in JP-A-9-169535, means for removing the metallic impurities in the glass particles deposit (core/clad) was disclosed. Herein, though the metallic impurities in the raw material were removed by filtrating a source gas of glass particles, the metallic impurities included in the atmosphere for producing the glass particles deposit could not be prevented from being mixed into the glass particles deposit.

In JP-A-2000-63147, it was disclosed that a quartz-based optical fiber preform was produced to have a step difference in the chlorine concentration distribution in the radial direction within 0.1wt% as the concentration of chlorine, so that the optical fiber preform having desired characteristics could be obtained. In this case, a glass rod with second clad is dehydrated and sintered at 1470°C in the atmosphere of a mixture gas (chlorine gas concentration 16 mol%) including an inert gas and a chlorine gas in a sintering reaction furnace. The glass rod is dopedwith chlorine gas and vitrified. However, there is insufficient effect of reducing the metallic impurities in the glass particles deposit.

The above method had the problem that the metallic impurities in the glass particles deposit could not be reduced efficiently. Namely, it has been found that if the glass particles deposit is dehydrated at temperatures of 1000 to 1300°C below the vitrification temperature and vitrified in the He atmosphere, and the glass preform is fiberized, the disconnection is likely caused by the metallic impurities in the screening test of fiber. As its countermeasure, various studies were made to suppress the impurities mixed into the glass particles deposit, but the desirable effect could not be obtained.

### Summary of the Invention

A present invention has been achieved in the light of the above-mentioned problems. It is an object of the invention to provide a glass preform of high purity and high quality by adding a chlorine based gas into the atmosphere within a furnace tube in a vitrification process to reduce the metallic impurities in a glass particles deposit efficiently.

Thus, as a result of examinations to reduce the metallic impurities taken into the glass particles deposit through the heating process, the present inventors have confirmed in the screen test that the frequency of disconnection is drastically decreased for the fiber fabricated using the glass preform produced in the atmosphere (including the chlorine gas) where the chlorine based gas is added to the furnace tube atmosphere in the vitrification process.

The chlorine based gas as used here means a chlorine gas and a chlorine compound gas. A removal mechanism of the metallic impurities involves exposing the glass particles deposit to the chlorine atmosphere at high temperatures to easily make chloridic the metallic impurities in the glass particles deposit and volatilizing and removing the metallic impurities.

Also, in case that the metallic impurities are not volatilized and removed, the metallic impurities having angular shape in the glass particles deposit is etched due to the existence of chlorine, and made almost spherical, whereby a stress concentration on the mixed portion of metallic impurities can be suppressed in the screening test.

The above object of the invention can be achieved in terms of each of the following inventions or embodiments. In this specification, the "heater temperature" as used herein means "the temperature of the heater outer surface at the central position of heater". Also, the glass particles deposit means the formation of glass particles deposit to make the clad layer on the surface of core rod, or the formation of glass particles deposit to make a clad layer (jacket layer) on the surface of core/clad rod having a part of the clad layer formed on the surface of core rod.

A first invention is a method for manufacturing a glass preform, characterized by including a heating process for vitrifying a glass particles deposit in a gas atmosphere including chlorine or an atmosphere including a chlorine based gas.

Preferably, a heating process includes a first heat treatment process for dehydrating a water content, which is adsorbed or included in the glass particles deposit, by exposing the glass particles deposit to the gas atmosphere including the chlorine based gas. A second heat treatment process for vitrifying the glass particles deposit in the gas atmosphere including the chlorine based gas after the first heat treatment process.

Preferably, the heating process further includes a third heat treatment process for heating the glass particles deposit in the gas atmosphere including the chlorine based gas between the first heat treatment process and the second heat treatment process.

Preferably, the heating process includes a third heat treatment process for heating the glass particles deposit in the gas atmosphere including the chlorine based gas prior to vitrification.

Preferably, the heating process includes heating the glass particles deposit while being moved successively in a longitudinal direction.

Preferably, the heating process includes heating the glass particles deposit exposed to the furnace tube atmosphere including the chlorine based gas in at least one of the heat treatment processes.

Preferably, the heating process is made to include such an amount of chlorine that the concentration of residual chlorine in a clad portion of the glass preform vitrified through the heating process may be 0.20wt% or greater. The concentration of residual chlorine depends on the chlorine concentration, the heating temperature and the heating time within the furnace tube, and these conditions are desirably regulated.

Preferably, the first heat treatment process is made at a heater temperature from 1000 to 1350°C.

Preferably, the second heat treatment process is made at a heater temperature from 1450 to 1600°C.

Preferably, the third heat treatment process is made at a heater temperature from 1350 to 1450°C.

Preferably, the first heat treatment process includes heating the glass particles deposit in the atmosphere include the chlorine based gas as a dehydrating agent as well as He gas so that the ratio of charge amount (SLM) of chlorine based gas to He gas may be 1 to from 0 to 10.

Preferably, the second heat treatment process includes heating in the atmosphere including the chlorine based gas and the He gas so that the ratio of charge amount (SLM) of chlorine based gas to He gas may be 1 to from 0 to 10.

Preferably, the third heat treatment process includes heating the glass particles deposit in the atmosphere including the chlorine based gas as the dehydrating agent and the He gas so that the ratio of charge amount (SLM) of chlorine based gas to He gas may be 1 to from 0 to 10.

Preferably, the average bulk density of. glass particles deposit is from 0.4g/cm³ to 1.0g/cm³. If the average bulk density of glass particles deposit is from 0.4g/cm³ to 1.0g/cm³, the impurities are unlikely reduced by the conventional technique, but can be easily reduced by the method of this invention. The method of this invention is particularly effective in the case where the average bulk density of glass particles deposit is from 0.4g/cm³ to 1.0g/cm³.

Preferably, the average bulk density of glass particles deposit is from 0.4g/cm³ to 0.8g/cm³. In particular, if the average bulk density is beyond 0.9g/cm³, it is slightlydifficult to vitrify the glass particles deposit. Therefore, the average bulk density is effectively in a range from 0.4g/cm³ to 0.8g/cm³.

Preferably, the glass particles deposit has glass particles deposited around the periphery of a starting glass rod that is fabricated by welding a dummy glass rod at both ends of a core glass rod having a core alone or a core/clad.

Preferably, the heating process in the gas atmosphere including the chlorine based gas has a total heating time of 140 minutes or more.

Preferably, the glass particles deposit is formed by the OVD method.

A glass preform of the invention comprises a core and a clad formed to cover a periphery of the core, characterized in that the concentration of residual chlorine in at least a part of the clad is 0.2wt% or more.

Preferably, the concentration of residual chlorine in the entire clad is 0.2wt% or more.

That is, the invention provides a method for manufacturing a glass preform through a heating process of heating a glass particles deposit including a part of the clad while moving it successively in the longitudinal direction, and vitrifying the glass particles deposit to form the preform, characterized in that a chlorine based gas is preferably included in a furnace tube atmosphere in the process of heating the glass preform while moving at least the glass preform upward or downward, using a lift for traversing the glass particles deposit (glass preform) upward or downward throughout the process, and vitrifying the glass preform.

### Brief Description of the Drawing

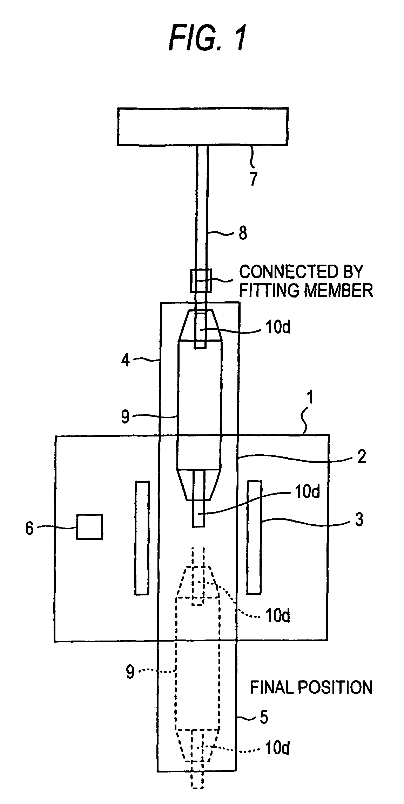

Fig. 1 is a concept view of an apparatus for implementing a method of the present invention.

Reference numeral 1 denotes a furnace casing, 2 denotes a furnace tube, 3 denotes a heater, 4 denotes an upper lid, 5 denotes a lower lid, 6 denotes a radiation thermometer, 7 denotes an elevator, 8 denotes a suspension rod, 9 denotes a preform, S denotes a start position, and F denotes a final position.

### Best Mode for Carrying Out the Invention

Preferred embodiments of the present invention will be described below.

With this inventive method, to remove OH radicals included in a glass particles deposit, after the glass particles deposit is exposed to a gas atmosphere including a chlorine based gas at lower temperatures than a vitrification temperature (first heat treatment), and before the glass particles deposit is vitrified in the gas atmosphere including the chlorine based gas (second heat treatment), the glass particles deposit is heated in the gas atmosphere including the chlorine based gas (third heat treatment).

Thereby, the metallic impurities within the glass particles deposit is decreasedefficiently, so that the strength of optical fiber fabricated employing this glass preform can be enhanced. In this manner, the third heat treatment process is performed to heat the glass particles deposit at lower temperatures than in the second heat treatment process, prior to the second heat treatment in the gas atmosphere including chlorine based gas, whereby the metallic impurities is converted into chloride effectively. Thus, the metallic impurities is removed or made almost spherical even if not removed, so that the strength of glass can be increased due to the spherical metallic impurities.

Herein, in a state where the deposit surface is completely transparent, the chlorine based gas can not be added to the glass. Prior to a vitrification process, a chlorine addition process (third heat treatment) is provided to remove the metallic impurities efficiently or make the metallic impurities spherical.

The chlorine addition process is also enabled in the vitrification process (second heat treatment process). It is considered that chlorine can be added to the glass particles at the vitrification temperature due to the fact that the diffusion rate of chlorine into the glass particles is higher than the vitrification rate of glass particles deposit.

Apart from the first heat treatment (dehydration) process and the second heat treatment (vitrification) process, the heating process for vitrification may be employed for the chlorine addition process to remove the impurities without the chlorine addition process or the third heat treatment process (metallic impurities removal process). Thereby, the processing time can be shortened.

Further, the traverse speed in the second heat treatment process may be varied depending on the heater length, but is usually 1 to 10mm/min, and preferably 2 to 5mm/min in view of the effect of reducing metallic impurities, the productivity, and the stretched glass preform.

Fig. 1 shows an apparatus suitable for implementing the method for manufacturing the glass preform according to the invention. This apparatus comprises the furnace casing 1 having an inlet/outlet opening for inserting the furnace tube 2 on each of the upper and lower sides, the heater 3 installed within the furnace casing 1, the furnace tube 2 for isolating the preform 9 from heater 3, the upper lid 4 for sealing off the inlet/outlet opening of the preform above the furnace tube 2 after inserting the preform 9, the radiation thermometer 6 for monitoring the heater temperature, and the elevator 7 for lifting the preform 9 up or down.

Using this apparatus, the glass particles deposit is dehydrated and sintered as follows. First of all, a starting glass rod 10d is produced by welding a glass dummy rod to both ends of a core glass rod having a core/clad portion. Glass particles are deposited around the periphery of this starting rod 10d by the OVD method, and using a produced deposit, the preform is dehydrated and sintered with the apparatus of Fig. 1. In this case, the bulk density of glass particles deposit is measured beforehand. The bulk density is preferably in a range from 0.4 to 1.0g/cm³ on average of each section of the preform. This glass preform is placed at the start position S in Fig. 1. Then, the heater temperature is raised, while a mixture gas of Cl₂ and He with a specific ratio is flowed into the furnace tube. The heater temperature is held in a particular temperature range, and the preform is caused to descend at an appropriate speed (first heat treatment) . At the time when the preform arrives at the final position (lowest end) F of traverse in Fig. 1, the preform is lifted to the start position S. The temperature is raised again, the mixture gas of Cl₂ and He with a specific ratio is flowed into the furnace tube, the glass preform is caused to descend at appropriate speed when the heater temperature is at a particular temperature (third heat treatment), and the preform is lifted when the final position F or the lowest end is reached.

Then, the temperature starts to be raised again, the mixture gas of Cl₂ and He with a specific ratio is flowed into the furnace tube, the preform is caused to descend at appropriate speed when the heater temperature falls within a particular temperature range (second heat treatment), the preform is lifted when the final position F or the lowest end is reached, and the power of the furnace heater is turned off. In this manner, the produced glass preform is fiberized, the screening test is conducted, and the frequency of disconnection is checked to confirm the effect.

The heater temperature in the dehydration process (first heat treatment) is from 1000 to 1350°C, preferably from 1000 to 1300°C, and more preferably from 1200 to 1300°C. the heater temperature in the chlorine addition process (third heat treatment) is preferably from 1350 to 1450°C. Also, the heater temperature in the sintering process (second heat treatment) is preferably from 1350 to 1450°C, and more preferably from 1520 to 1570°C.
[2] In one heating process, the dehydration, vitrification, and removal or spheroidizing of metallic impurities are made at the same time. In this way, there is the effect that the treatment time is shortened and the cost is reduced.
[3] Another heat treatment process, which is provided between the first heat treatment process and the second heat treatment process, is performed in the gas atmosphere including the chlorine based gas within the furnace tube, whereby there is an enhanced effect of removing the metallic impurities in the glass particles deposit or spheroidizing the metallic impurities. Thereby, the treatment time is lengthened, but the strength of fiber is increased as compared with that of (1) and (2) as above cited,
[4] Though in the heat treatment process for vitrifying the glass preform, chlorine is included in the furnace tube atmosphere, another heat treatment process is provided before the vitrification heating process. In this another heat treatment process, chlorine is also included in the furnace tube atmosphere to further enhance the effect of removing the metallic impurities or spheroidizing the metallic impurities in the glass particles deposit.
[5] In the above methods (1) to (4), the concentration of residual chlorine in the glass preform after the second heat treatment process is set to be 0.20wt% or more, and preferably 0.2 to 0.33wt%, whereby there is remarkably less frequency of disconnection in the screening test for the produced fiber.
[6] In the above method (1) or (3), the heater temperature in the first heat treatment process is limited to 1000 to 1350°C, whereby the OH radicals are efficiently removed.
[7] In the above methods (1) to (4), the heater temperature in the vitrification process is limited to 1450 to 1600°C, the metallic impurities is removed or substantially spheroidized, and the glass particles deposit can be vitrified. Beyond 1600°C, a problem arises that the glass preform is softened, and stretched.
[8] In the above method (1) or (4), the heater temperature is limited to 1350 to 1450°C in another heat treatment process provided between the first heat treatment process and the second heat treatment process, or before the vitrification process, whereby the metallic impurities is removed or substantially spheroidized effectively.
[9] In the above method (1) or (3), the charge ratio of chlorine based gas to inert gas is limited to 1:0 to 10 in the first heat treatment process, whereby the OH radicals are removed more efficiently. In the case where the charge ratio is 1 to more than 10, the concentration of chlorine in the furnace tube atmosphere is so low that there is less effect of removing the OH radicals.
[10] In the above methods (1) to (4), the charge ratio of chlorine based gas to inert gas is limited to 1:0 to 10 in the vitrification process, whereby the metallic impurities are removed or substantially spheroidized efficiently. In the case where the charge ratio is 1 to more than 10, the concentration of chlorine in the furnace tube atmosphere is so low that there is less effect of removing the metallic impurities.
[11] In the above method (1) or (4), the charge ratio of chlorine based gas to inert gas is limited to 1:0 to 10 in a newly provided heat treatment process, whereby the metallic impurities is removed more efficiently. In the case where the charge ratio is 1 to more than 10, the concentration of chlorine in the furnace tube atmosphere is so low that there is less effect of removing the metallic impurities.
[12] In the above methods (1) to (11), the average bulk density of clad portion in the glass particles deposit is limited to 0.4g/cm³ to 1.0g/cm³. Below 0.4g/cm³, if the chlorine based gas is added to the furnace tube atmosphere in the vitrification process, voids may possibly occur because more chlorine is entered into the glass. At the bulk densities of more than 1.0g/cm³, the heat is less conductive, and the vitrification is difficult.
[13] In the above methods (1) to (12), the glass particles deposit is preferably produced by depositing glass particles around the periphery of the core glass rod having the core/clad. For its reason, the deposition percentage of the core rod in the fiber is small, with low probability of including the metallic impurities in the core rod. Conversely, a vitrified portion of glass particles deposited around the periphery of the core glass rod occupies 90% or more of the fiber volume, with high probability of including the metallic impurities.
[14] In the above methods (1) to (13), a heating area is from the upper end to the lower end of the heater, the time (dehydration (heating time) + vitrification (heating time) or vitrification (heating time) alone or dehydration (heating time) + α + vitrification (heating time) or α + vitrification (heating time), viz., the total heating time in the chlorine atmosphere, for which each position of the glass particles deposit in the longitudinal direction passes the heating area in the chlorine furnace tube atmosphere, is 140 minutes or more to reduce the metallic impurities. Less than 140 minutes, the metallic impurities are likely to remain in the glass preform. (Where α signifies the time of the third heat treatment process that is the chlorine addition heating process added between the dehydration and the vitrification in the method (1) or the third heat treatment process that is the chlorine addition heating process added before the vitrification in the method (4)).
[15] In particular, the glass preform produced by the above methods (1) to (14) has a concentration of residual chlorine of 0.20wt% or more, and accordingly, the metallic impurities in the fiber is reduced.

The present invention will be described below in more detail using the examples and comparative examples, but the invention is not limited to those examples and comparative examples.

A screening test conducted in each example is a fiber strength test. Usually, in the submarine fiber, a load (1.8 to 2.2kgf, 1s) at a stretching rate of 2% in the longitudinal direction of fiber is applied to the fiber to cut off the portion of low strength in advance prior to the shipment of products. If there are a number of fiber disconnections, the frequency of inspections or the number of connecting portions is increased, whereby the final fiber cost is jumped many times over.

### (Example 1)

A starting glass rod was fabricated by welding a glass dummy rod at both ends of a core glass rod with a diameter of 20mm having a core/clad portion. Glass particles were deposited around the periphery of this starting rod by the OVD method. A glass preform was produced by dehydrating and sintering this glass particles deposit, employing an apparatus (heater length: 400mm) with the constitution as shown in Fig. 1. The bulk density of glass particles deposit was measured beforehand, and it was confirmed to be 0.7g/cm³ on average in each section within the glass preform. This glass preform was placed at a start position (Fig. 1), and the furnace temperature was raised while a mixture gas of Cl₂ : 5SLM and He : 20SLM was flowed into the furnace tube. The heater temperature was kept at 1300°C, and the glass preform was caused to descend at a speed of 10mm/min. At the time when the preform arrived at the lowest end of traverse (Fig. 1), the glass preform was lifted, and restored to the start position S. At the same time, the temperature elevation was started and the mixture gas of Cl₂ : 5SLM and He : 20SLM was flowed into the furnace tube. When the heater temperature got to 1550°C, the preform was caused to descend at a speed of 3mm/min. At the time when the preform arrived at the final position F or the lowest end of traverse, the preform was lifted, while at the same time the power of the furnace heater was turned off. The total time for which eachposition of the glass particles deposit in the longitudinal direction passed the heater in the chlorine furnace tube atmosphere was 173 minutes. The produced preform was fiberized, and subjected to the screening test, which revealed a disconnection frequency of 10/Mm.

The concentration of residual chlorine in the glass preform thus obtained was 0.25wt%. The ion chromatography was employed to measure the concentration of chlorine (same in the following examples).

The heater temperature in dehydration is preferably kept at 1000 to 1350°C, and more preferably at 1250 to 1350°C. Also, the heater temperature in sintering is preferably kept at 1450 to 1600°C, and more preferably at 1520 to 1570°C.

### (Example 2)

A starting glass rod was fabricated by welding a glass dummy rod at both ends of a core glass rod with a diameter of 20mm having a core/clad portion. Glass particles were deposited around the periphery of this starting rod by the OVD method. A.preform was produced by dehydrating and sintering this glass particles deposit, employing an apparatus (heater length: 400mm) with the constitution as shown in Fig.1. The bulk density of glass particles deposit was measured beforehand, and it was confirmed to be 0.7g/cm³ on average in each section within the preform. This glass preform was placed at a start position (Fig. 1) , and the furnace temperature was raised while a mixture gas of Cl₂ : 5SLM and He : 20SLM was flowed into the furnace tube. The heater temperature was kept at 1550°C, and the preform was caused to descend at a speed of 2mm/min. At the time when the preform arrived at the final position F or the lowest end of traverse, the preform was lifted, while at the same time the power of the furnace heater was turned off. The total time for which each position of the glass particles deposit in the longitudinal direction passed the heater in the chlorine furnace tube atmosphere was 200 minutes. The produced preform was fiberized, and subjected to the screening test, which revealed a disconnection frequency of 10/Mm. The concentration of residual chlorine in the preform was 0.22wt%.

The heater temperature in sintering is preferably kept at 1450 to 1600°C, and more preferably at 1520 to 1570°C.

### (Example 3)

A starting glass rod was fabricated by welding a glass dummy rod at both ends of a core glass rod with a diameter of 20mm having a core/clad portion. Glass particles were deposited around the periphery of this starting rod by the OVD method. A preform was produced by dehydrating and sintering this glass particles deposit, employing an apparatus (heater length: 400mm) with the constitution as shown in Fig. 1. Thebulkdensity of glass particles deposit was measured beforehand, and it was confirmed to be 0.7g/cm³ on average in each section within the preform. This glass preform was placed at a start position S (Fig. 1), and the furnace temperature was raised while a mixture gas of Cl₂ : 5SLM and He : 20SLM was flowed into the furnace tube. The heater temperature was kept at 1300°C, and the preform was caused to descend at a speed of 10mm/min. At the time when the preform arrived at the final position F or the lowest end of.traverse (Fig. 1), the preform was lifted, and restored to the start position. At the same time, the temperature elevation was started and the mixture gas of Cl₂ : 5SLM and He : 20SLM was flowed into the furnace tube. When the heater temperature got to 1400°C, the preform was caused to descend at a speed of 5mm/min. At the time when the preform arrived at the lowest end of traverse, the preform was lifted, and restored to the start position. At the same time, the temperature elevation was started and the mixture gas of Cl₂ : 5SLM and He : 20SLM was flowed into the furnace tube. When the heater temperature got to 1550°C, the preform was caused to descend at a speed of 4mm/min. At the time when the preform arrived at the lowest end of traverse, the preform was lifted, while at the same time the power of the furnace heater was turned off. The total time for which each position of the glass particles deposit in the longitudinal direction passed the heater in the chlorine furnace tube atmosphere was 220 minutes. The produced glass preform was fiberized, and subjected to the screening test, which revealed a disconnection frequency of 7/Mm.

The concentration of residual chlorine in the glass preform thus obtained was 0.3wt%.

### (Example 4)

A starting glass rod was fabricated by welding a glass dummy rod at both ends of a core glass rod with a diameter of 20mm having a core/clad portion. Glass particles were deposited around the periphery of this starting rod by the OVD method. A preform was produced by dehydrating and sintering this glass particles deposit, employing an apparatus (heater length: 400mm) with the constitution as shown in Fig. 1. The bulk density, of glass particles deposit was measured beforehand, and it was confirmed to be 0.2g/cm³ on average in each section within the preform. This glass preform was placed at a start position S (Fig. 1), and the furnace temperature was raised while a mixture gas of Cl₂ : 2SLM and He : 20SLM was flowed into the furnace tube. The heater temperature was kept at 1300°C, and the preform was caused to descend at a speed of 10mm/min. At the time when the preform arrived at the final position F or the lowest end of traverse (Fig. 1) , the preform was lifted, and restored to the start position S. At the same time, the temperature elevation was started and the mixture gas of Cl₂ : 2SLM and He : 20SLM was flowed into the furnace tube. When the heater temperature got to 1550°C, the preform was caused to descend at a speed of 3mm/min. At the time when the preform arrived at the final position F or the lowest end of traverse, the preform was lifted, while at the same time the power of the furnace heater was turned off. The total time for which eachposition of the glass particles deposit in the longitudinal direction passed the heater in the chlorine furnace tube atmosphere was 173 minutes. The produced glass preform included an excess amount of chlorine to produce slightly voids, but was fiberized and subjected to the screening test, which revealed a disconnection frequency of 11/Mm. The concentration of residual chlorine in the glass preform was 0.32wt%.

### (Example 5)

A starting glass rod was fabricated by welding a glass dummy rod at both ends of a core glass rod with a diameter of 20mm having a core/clad portion. Glass particles were deposited around the periphery of this starting rod by the OVD method. A preform was produced by dehydrating and sintering this glass particles deposit, employing an apparatus (heater length: 400mm) with the constitution as shown in Fig.1. The bulk density of glass particles deposit was measured beforehand, and it was confirmed to be 1.2g/cm³ on average in each section within the preform. This glass preform was placed at a start position S (Fig. 1), and the furnace temperature was raised while a mixture gas of Cl₂ : 5SLM and He : 20SLM was flowed into the furnace tube. The heater temperature was kept at 1300°C, and the preform was caused to descend at a speed of 2mm/min. At the time when the preform arrived at the lowest end of traverse (Fig. 1), the preform was lifted, and restored to the start position. At the same time, the temperature elevation was started and the mixture gas of Cl₂ : 5SLM and He : 20SLM was flowed into the furnace tube. When the heater temperature got to 1550°C, the preform was caused to descend at a speed of 0.5mm/min. At the time when the preform arrived at the lowest end of traverse, the preform was lifted, while at the same time the power of the furnace heater was turned off. The total time for which each position of the glass particles deposit in the longitudinal direction passed the heater in the chlorine furnace tube atmosphere was 1000 minutes. The preform was not prone to heating because the glass particles deposit was too hard, and took a longer processing time. The produced glass preform was fiberized, and subjected to the screening test, which revealed a disconnection frequency of 13/Mm. The concentration of residual chlorine was 0.2wt%.

### (Comparative example 1)

A starting glass rod was fabricated by welding a glass dummy rod at both ends of a core glass rod with a diameter of 20mm having a core/clad portion. Glass particles were deposited around the periphery of this starting rod by the OVD method. A preform was produced by dehydrating and sintering this glass particles deposit, employing an apparatus (heater length: 400mm) with the constitution as shown in Fig. 1. The bulk density of glass particles deposit was measured beforehand, and it was confirmed to be 0.7g/cm³ on average in each section within the preform. This glass preform was placed at a start position S (Fig. 1) , and the furnace temperature was raised while a mixture gas of Cl₂ : 5SLM and He : 20SLM was flowed into the furnace tube. The heater temperature was kept at 1300°C, and the preform was caused to descend at a speed of 10mm/min. At the time when the preform arrived at the final position F or the lowest end of traverse (Fig. 1), the preform was lifted, and restored to the start position S. At the same time, the temperature elevation was started and He gas of 25SLM alone was flowed into the furnace tube. When the heater temperature got to 1550°C, the preform was caused to descend at a speed of 3mm/min. At the time when the preform arrived at the final position F or the lowest end of traverse, the preform was lifted, while at the same time the power of the furnace heater was turned off. The total time for which each position of the glass particles deposit in the longitudinal directionpassed the heater in the chlorine furnace tube atmosphere was 40 minutes. The produced preform was fiberized, and subjected to the screening test, which revealed a disconnection frequency of 100/Mm. The concentration of residual chlorine in the glass preform thus obtained was 0.17wt%.

### (Comparative example 2)

A starting glass rod was fabricated by welding a glass dummy rod at both ends of a core glass rod with a diameter of 20mm having a core/clad portion. Glass particles were deposited around the periphery of this starting rod by the OVD method. A preform was produced by dehydrating and sintering this glass particles deposit, employing an apparatus (heater length: 400mm) with the constitution as shown in Fig. 1. Thebulkdensity of glass particles deposit was measured beforehand, and it was confirmed to be 0.7g/cm³ on average in each section within the preform. This glass preform was placed at a start position S (Fig. 1), and the furnace temperature was raised while He gas of 25SLM alone was flowed into the furnace tube. The heater temperature was kept at 1550°C, and the preform was caused to descend at a speed of 2mm/min. At the time when the preform arrived at the final position F or the lowest end of traverse, the preform was lifted, while at the same time the power of the furnace heater was turned off. The total time for which each position of the glass particles deposit in the longitudinal direction passed the heater in the chlorine furnace tube atmosphere was zero minutes. The produced preform was fiberized, and subjected to the screening test, which revealed a disconnection frequency of 200/Mm. The concentration of residual chlorine in the preform thus obtained was 0wt%.

### (Comparative example 3)

A starting glass rod was fabricated by welding a glass dummy rod at both ends of a core glass rod with a diameter of 20mm having a core/clad portion. Glass.particles were deposited around the periphery of this starting rod by the OVD method. A preform was produced by dehydrating and sintering this glass particles deposit, employing an apparatus (heater length: 400mm) with the constitution as shown in Fig. 1. The bulk density of glass particles deposit was measured beforehand, and it was confirmed to be 0.2g/cm³ on average in each section within the preform. This glass preform was placed at a start position S (Fig. 1), and the furnace temperature was raised while a mixture gas of Cl₂ : 5SLM and He : 20SLM was flowed into the furnace tube. The heater temperature was kept at 1300°C, and the preform was caused to descend at a speed of 10mm/min. At the time when the glass preform arrived at the final position F or the lowest end of traverse (Fig. 1), the glass preform was lifted, and restored to the start position S. At the same time, the temperature elevation was started and the mixture gas of Cl₂ : 5SLM and He : 20SLM was flowed into the furnace tube. When the heater temperature got to 1550°C, the glass preform was caused to descend at a speed of 4mm/min. At the time when the glass preform arrived at the final position F or the lowest end of traverse, the glass preform was lifted, while at the same time the power of the furnace heater was turned off. The total time for which each position of the glass particles deposit in the longitudinal direction passed the heater in the chlorine furnace tube atmosphere was 140 minutes. The produced glass preform included an excess amount of chlorine to produce many voids arose, and could not be fiberized. The concentration of residual chlorine was 0.35wt%.

### (Comparative example 4)

A starting glass rod was fabricated by welding a glass dummy rod at both ends of a core glass rod with a diameter of 20mm having a core/clad portion. Glass particles were deposited around the periphery of this starting rod by the OVD method. A glass preform was produced by dehydrating and sintering this glass particles deposit, employing an apparatus (heater length: 400mm) with the constitution as shown in Fig. 1. Thebulkdensity of glass particles deposit was measured beforehand, and it was confirmed to be 1.2g/cm³ on average in each section within the glass preform. This glass preform was placed at a start position S (Fig. 1) , and the furnace temperature was raised while a mixture gas of Cl₂ : 5SLM and He : 20SLM was flowed into the furnace tube. The heater temperature was kept at 1300°C, and the glass preform was caused to descend at a speed of 10mm/min. At the time when the glass preform arrived at the final position F or the lowest end of traverse (Fig. 1), the glass preform was lifted, and restored to the start position. At the same time, the temperature elevation was started and the mixture gas of Cl₂ : 5SLM and He : 20SLM was flowed into the furnace tube. When the heater temperature got to 1550°C, the glass preform was caused to descend at a speed of 4mm/min. At the time when the glass preform arrived at the lowest end of traverse, the glass preform was lifted, while at the same time the power of the furnace heater was turned off. The total time for which each position of the glass particles deposit in the longitudinal direction passed the heater in the chlorine furnace tube atmosphere was 140 minutes. The produced glass preform was not prone to heating and not sintered because the glass particles deposit was too hard, and could not be fiberized. The concentration of residual chlorine could not be measured.

### Industrial applicability

In the method for manufacturing the glass preform through the synthesis of glass particles deposit by the OVD method, one stage heating process involving the vitrification alone, or two stage heating process involving the hydration and vitrification, or a new heating process between hydration and vitrification is provided, and a gas including the chlorine based gas is flowed in any heating process, thereby bringing about the enhanced effect of reducing the metallic impurities with chlorine.

## Claims

1. A method for manufacturing a glass preform **characterized by** including a heating process for vitrifying a glass particles deposit in a gas atmosphere including a chlorine based gas.

2. The method for manufacturing the glass preform according to claim 1, **characterized in that** said heating process includes a first heat treatment process for dehydrating the water content adsorbed or included in said glass particles deposit by exposing said glass particles deposit to said gas atmosphere including the chlorine based gas; and
a second heat treatment process for vitrifying said glass particles deposit in said gas atmosphere including the chlorine based gas after said first heat treatment process.

3. The method for manufacturing the glass preform according to claim 2, **characterized in that** said heating process further includes a third heat treatment process for heating said glass particles deposit in said gas atmosphere including the chlorine based gas between said first heat treatment process and said second heat treatment process.

4. The method for manufacturing the glass preform according to claim 1, **characterized in that** said heating process includes a third heat treatment process for heating said glass particles deposit in said gas atmosphere including the chlorine based gas prior to vitrification.

5. The method for manufacturing the glass preform according to any one of claims 1 to 4, **characterized in that** said heating process includes heating said glass particles deposit while being moved successively in a longitudinal direction.

6. The method for manufacturing the glass preform according to any one of claims 1 to 4, **characterized in that** said heating process includes heating said glass particles deposit exposed to the furnace tube atmosphere including the chlorine based gas in at least one of said heat treatment processes.

7. The method for manufacturing the glass preform according to any one of claims 1 to 4, **characterized in that** said heating process is made to include such an amount of chlorine that the concentration of residual chlorine in a clad portion of the glass preform vitrified through said heating process may be 0.20wt% or greater.

8. The method for manufacturing the glass preform according to claim 2 or 3, **characterized in that** said first heat treatment process is made at a heater temperature from 1000 to 1350°C.

9. The method for manufacturing the glass preform according to any one of claims 1 to 4, **characterized in that** said second heat treatment process is made at a heater temperature from 1450 to 1600°C.

10. The method for manufacturing the glass preform according to claim 3 or 4, **characterized in that** said third heat treatment process is made at a heater temperature from 1350 to 1450°C.

11. The method for manufacturing the glass preform according to claim 2 or 3, **characterized in that** said first heat treatment process includes heating the glass particles deposit in the atmosphere including the chlorine based gas as a dehydrating agent as well as He gas so that a ratio of charge amount (SLM) of chlorine based gas to He gas may be 1 to from 0 to 10.

12. The method for manufacturing the glass preform according to anyone of claims 1 to 4, **characterized in that** said second heat treatment process includes heating in the atmosphere including the chlorine based gas and He gas so that a ratio of charge amount (SLM) of chlorine based gas to He gas may be 1 to from 0 to 10.

13. The method for manufacturing the glass preform according to claim 3 or 4, **characterized in that** said third heat treatment process includes heating the glass particles deposit in the atmosphere including the chlorine based gas and the He gas so that the ratio of charge amount (SLM) of chlorine based gas to He gas may be 1 to from 0 to 10.

14. The method for manufacturing the glass preform according to any one of claims 1 to 4, **characterized in that** the average bulk density of glass particles deposit is from 0.4g/cm³ to 1.0g/cm³.

15. The method for manufacturing the glass preform according to any one of claims 1 to 4, **characterized in that** the average bulk density of glass particles deposit is from 0.4g/cm³ to 0.8g/cm³.

16. The method for manufacturing the glass preform according to any one of claims 1 to 4, **characterized in that** said glass particles deposit has glass particles deposited around the periphery of a starting glass rod that is fabricated by welding a dummy glass rod at both ends of a core glass rod having a core alone or a core/clad.

17. The method for manufacturing the glass preform according to any one of claims 1 to 4, **characterized in that** saidheatingprocess in the gas atmosphere including the chlorine based gas has a total heating time of 140 minutes or more.

18. The method for manufacturing the glass preform according to any one of claims 1 to 4, **characterized in that** said glass particles deposit is formed by the OVD method.

19. A glass preform comprising a core and a clad formed to cover the periphery of said core, **characterized in that** the concentration of residual chlorine in at least a part of said clad is 0.2wt% or more.

20. The glass preform according to claim 19, **characterized in that** the concentration of residual chlorine in said entire clad is 0.2wt% or more.
